# EUROPEAN PATENT APPLICATION

(11) **EP 1 630 974 A1**
(43) Date of publication of application: **01.03.2006**
(21) Application number: 05255127.2
(22) Date of filing: 18.08.2005
(51) Int. Cl.: H04B 7/005

(54) **Outer loop power control for high speed data transmissions**

(30) Priority: 23.08.2004 US 924268
(71) Applicant: LUCENT TECHNOLOGIES INC., Murray Hill, New Jersey 07974-0636 (US)
(72) Inventor: Vasudevan, Subramanian, Morristown, New Jersey 07960 (US); Zhu, Lily H., Parsippany, New Jersey 07054 (US); Zou, Jialin, Randolph, New Jersey 07896 (US)
(74) Representative: Sarup, David Alexander

(57) **Abstract**

A method is provided for controlling a traffic-to-pilot ratio (TPR) in a wireless telecommunications channel. The methodology takes advantage of a preexisting feedback process used in hybrid ARQ transmission systems. Generally, information is transmitted over the communications channel, and then the acknowledgement (ACK) signal, or negative acknowledgements (NACK) signal, is used to adjust the TPR. The TPR is adjusted up substantially in response to receiving a NACK signal, and adjusted slightly down in response to receiving an ACK signal. In this manner, the TPR is rapidly adjusted up when a transmission fails, and is allowed to drift slowly down when a transmission succeeds.

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

In a CDMA2000 system, the reverse link outer loop power control (OLPC) is generally used to maintain the error rate performance of targeted traffic channels transmitted on the reverse link by the mobile station. Generally, the objective of the OLPC is to maintain a target frame error rate (FER) for a given channel. The OLPC sets the tracking target for an inner loop power control (ILPC). As a result, the desired FER of the traffic channel to be protected should be achieved through the ILPC.

Historically, outer-loop mechanisms have been proprietary, relying on the base station receiver(s) to use decoding results on each of these channels to make either: (a) adjustments to pilot strengths (increasing them on decoding failure and decreasing them on decoding success) and hence causing corresponding changes in the strengths of each of the individual channels since these maintain fixed traffic-to-pilot ratios (TPRs) with respect to the pilot; or (b) change traffic-to-pilot ratios of individual channels via signaling messages, or both.

One shortcoming of the first approach is that when multiple channels are present, the FER target for each channel may not be simultaneously met by raising the pilot alone (while holding the channel TPRs constant). Secondly, this method causes the strength of all channels to increase (which may not be necessary) when it is only required to increase the strength of a single channel. The second mechanism may complement the first but it is slow and places an unnecessary burden on the air interface.

In CDMA2000 Revision D, there are channel configurations in which the conventional CDMA2000-1x traffic channel(s) (such as the fundamental (voice) channel (FCH) from which the OLPC metrics have conventionally been generated) are not present. Thus it will not be possible to continue use of these metrics for OLPC when the packet data channel (PDCH) is present. Even if the channel configuration contains a 1x traffic channel, there is no guarantee that OLPC driven by decoding such a channel will result in meeting the target FER for the PDCH. Furthermore, in Revision D, multiple new channels are introduced. The new channels have different quality requirements. It is difficult using one OLPC driven pilot set point, to meet different quality targets of different channels (e.g., the reverse channel quality indicator channel R-CQICH and the reverse packet data channel R-PDCH) simultaneously. Finally, it is difficult to set the pilot set point based on R-PDCH decodes since this channel is not always transmitted. Those skilled in the art will appreciate that it is not straightforward to distinguish an inability to decode this channel from its absence. Such a mis-determination could result in the pilot set-point being unnecessarily increased.

The present invention is directed to overcoming, or at least reducing, the effects of, one or more of the problems set forth above.

### SUMMARY OF THE INVENTION

In one embodiment of the present invention, a method is provided for controlling a traffic-to-pilot ratio for a communications channel. The method comprises transmitting information over the communications channel, and adjusting the traffic-to-pilot ratio for the communications channel is response to receiving a signal indicating whether the information was successfully received.

### BRIEF DESCRIPTION OF THE DRAWINGS

The invention may be understood by reference to the following description taken in conjunction with the accompanying drawings, in which like reference numerals identify like elements, and in which:
Figure 1 illustrates one embodiment of a wireless telecommunications system in which the instant invention may be employed;
Figure 2 illustrates a stylized representation of signals delivered between the Mobile Unit (MU) and the Base Station (BS); and
Figure 3 illustrates a flow chart representation of a process for delivering subpackets from a mobile unit to a base station over R-PDCH and for adjusting the TPR associated with the R-PDCH.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It may be appreciated that in the development of any such actual embodiment, numerous implementation-specific decisions may be made to achieve the developers' specific goals, such as compliance with system-related and business-related constraints, which may vary from one implementation to another. Moreover, it will be appreciated that such a development effort might be complex and time-consuming, but could nevertheless be a routine undertaking for those of ordinary skill in the art having the benefit of this disclosure.

In one embodiment of the instant invention, a separate OLPC scheme maintains the error rate performance of the R-PDCH with minimal dependence as well as impact on the performance of other channels, such as pilot R-CQICH, R-FCH, *etc*. This will also relax the need of conventional OLPC to serve different quality requirements and make the conventional pilot based OLPC simpler. In this invention, a method to adjust the TPR of R-PDCH at the mobile station (MS) based on ACK/NACK feedback is proposed.

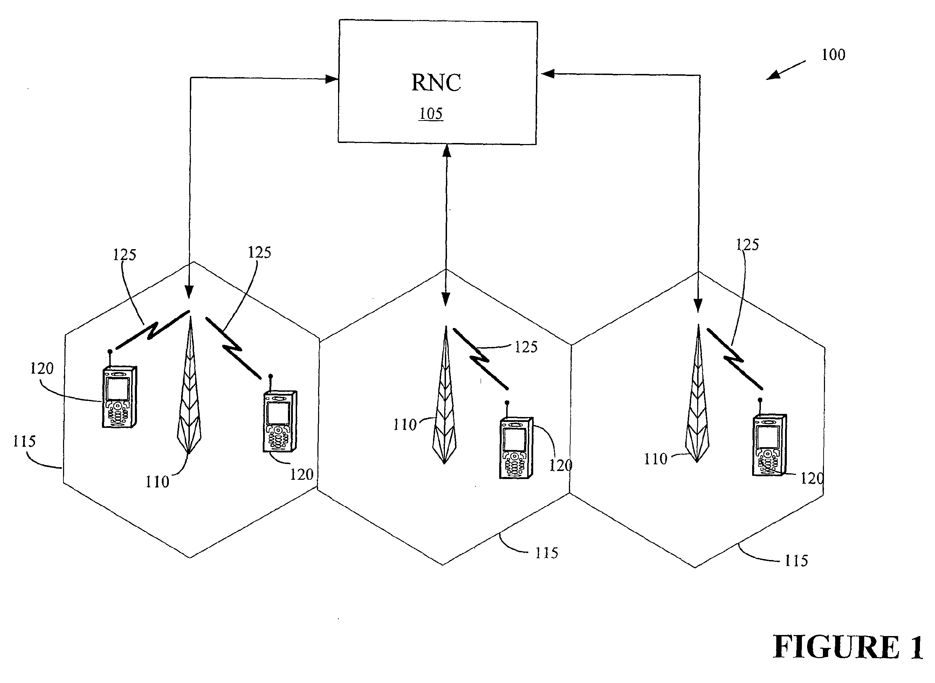

Figure 1 conceptually illustrates one embodiment of a wireless telecommunications system 100. In the illustrated embodiment, the wireless telecommunications system 100 is a cellular wireless telecommunications system 100 that operates in accordance with a code division multiple access (CDMA) 2000 protocol.

The wireless telecommunications system 100 includes a radio network controller (RNC) 105 that is communicatively coupled to one or more base stations 110. In alternative embodiments, the radio network controller 105 may be communicatively coupled to the one or more base stations 110 by any of a variety of wired and/or wireless links. Moreover, signals passed between the radio network controller 105 and the one or more base stations 110 may pass through other devices (not shown). For example, the signals may pass through one or more routers, switches, networks, and the like.

Each base station 110 is associated with at least one cell 115. For example, each base station 110 may be associated with a cell 115 corresponding to a geographic area having a radius of approximately 2 miles. However, persons of ordinary skill in the art should appreciate that the size of the cells 115 depends upon a variety of factors including, but not limited to, the transmission and/or reception power of the base station 110, the presence of obstructions such as buildings and/or mountains, and the like. Moreover, persons of ordinary skill in the art should appreciate that the cells 115 may not have a simple geometric shape, such as a hexagon, and boundaries of the cells 115 are not generally precisely defined, although in the interest of clarity the cells 115 shown in Figure 1 are depicted as hexagons having precise boundaries.

In operation, the mobile units 120 establish concurrent wireless communication links 125 with at least the base station 110 associated with the cell 115 containing the mobile unit 120. In one embodiment, the concurrent wireless communication links 125 includes a plurality of channels. The instant invention may have application in conjunction with many of the plurality of channels, however, for purposes of describing the instant invention its application with respect to the R-PDCH channel is presented herein.

The transmission mechanism for the R-PDCH consists of successive transmission attempts (up to a limit specified by the system) by the mobile station 120 until a positive acknowledgement is received. The base station 110 responds to each transmission (and retransmission) attempt with either a positive or a negative acknowledgement (ACKs and NACKs).

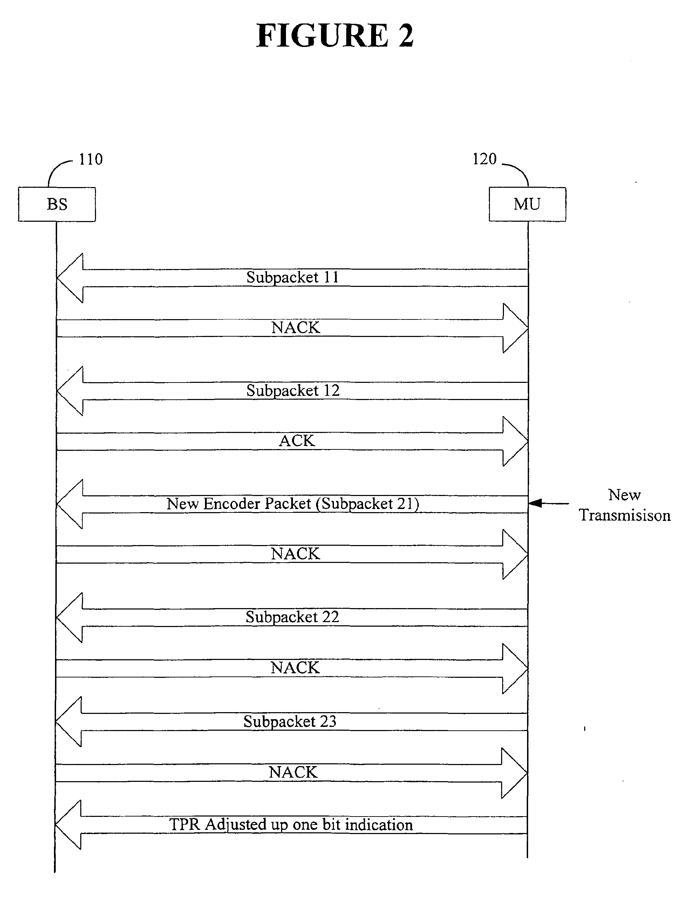

Turning now to Figure 2, the interplay of signals between the base station 110 and the mobile unit 120 is stylistically illustrated. The mobile unit 120 begins by delivering a first subpacket 11 over the R-PDCH channel to the base station 110. In the illustrated embodiment, the base station 110 is unable to properly decode the subpacket 11, and thus, responds by delivering a NACK signal to the mobile unit 120. The mobile unit 120 responds to the NACK signal by delivering subpacket 12. This time, the base station 110 is able to fully decode the subpacket 12, and thus, informs the mobile unit 120 with an ACK signal. The mobile unit 120 terminates the retransmission process early in view of the successfully received subpacket 12 and moves on to a new encoder packet.

Those skilled in the art will appreciate that the number of retransmissions permitted is a design choice that depends on a number of factors in a specific implementation. For example, in the illustrated embodiment, the mobile unit 120 will be permitted to transmit a total of three subpackets, as long as it receives a NACK signal from the base station 110. As shown in Figure 2, the mobile unit 120 transmits a total of three subpackets 21, 22, 23 in response to receiving the NACK signal from the base station 110.

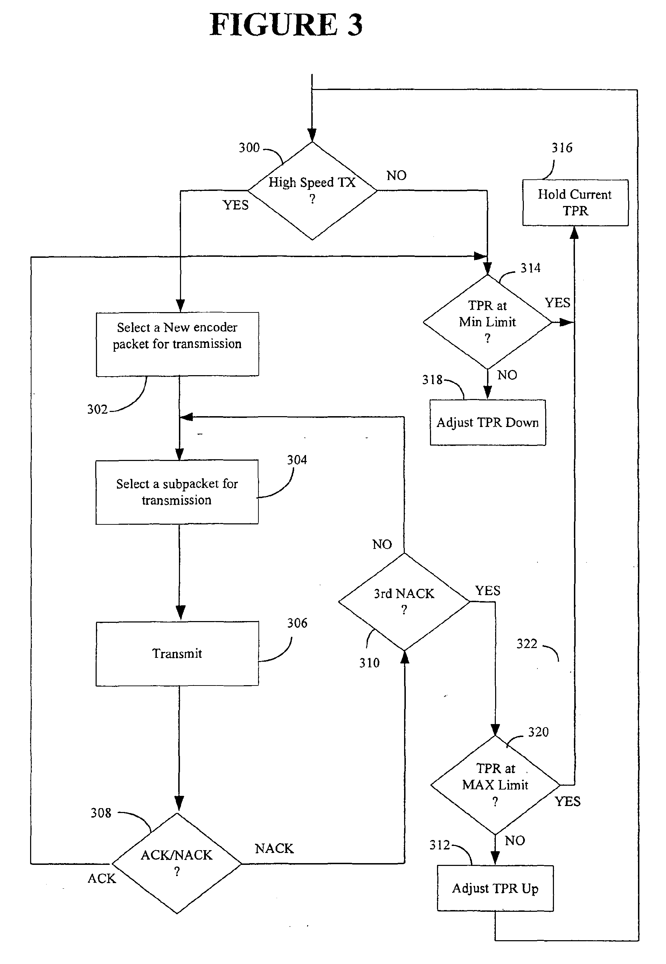

The process is further described in the stylistic flowchart of Figure 3. The process begins at block 300 with the mobile unit 120 determining that a new high-speed transmission is set to occur. Then, at block 302 a new encoder packet is selected for transmission. Further, at block 304, the mobile unit 120 determines the proper subpacket to be transmitted, and then transmits the selected subpacket to the base station 110 at block 306. Thereafter, the mobile unit 120 waits for an acknowledgment signal from the base station 110. If an ACK signal is received, a decision block 308 routes control to block 314 to determine whether the current TPR is at the minimum limit. If the current TPR is at the minimum limit, then the TPR is held at its current level at block 316. Otherwise, control transfers to block 318 where a first type of adjustment is made to the TPR, and then the process is repeated with a new encoder packet. As discussed in more detail below, in the illustrated embodiment, the TPR is adjusted down in block 318

Alternatively, if a NACK signal is received, the decision block 308 routes control to decision block 310. If the mobile unit 120 has not received three NACK signals, then control returns to block 304 where the next subpacket is selected and transmitted. On the other hand, if the mobile unit 120 has received three NACK signals with respect to the current encoder packet, then control is transferred to block 320 to determine whether current TPR is at the maximum level. If current TPR is at the maximum level, control transfers to block 316, and the TPR is held at its current level. Otherwise, if the TPR is below its maximum level, the control transfers to block 312 where a second type of adjustment is made to the TPR. As is discussed in more detail below, in the illustrated embodiment, the TPR is adjusted up

Returning to block 300, if the mobile unit 120 does not schedule a high speed data transmission, the process is directed to block 314 to adjust the TPR down.

The basic algorithm used to adjust the TPR in blocks 318 and 312 is:

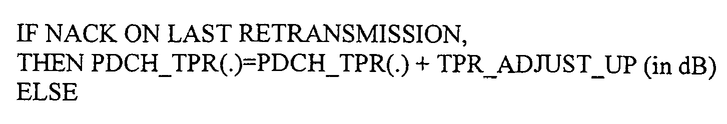

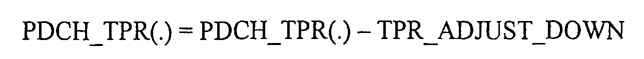

Essentially, the mobile unit 120 increases the strength of the PDCH whenever three transmission failures occur to preserve the diversity gain of the retransmissions. When transmissions succeed, or even when there are no transmissions, the PDCH strength of the next possible transmission is lowered. Typically, the step up is larger than the step down. The step up may be 0.5 dB while the step down may be a fraction of the step up value. For example, in one embodiment of the instant invention, the step down may be only one-hundredth of the step up value. This approach corrects packet errors fast while drifting the TPR value to the level at which the FER target is maintained.

It will be appreciated that acknowledgment signals may be sent from more than one base station 110 (or sectors per base station). In one embodiment of the instant invention, however, the mobile unit 120 will use only the acknowledgments from its serving sector to drive TPR adjustments for the PDCH. Rate control from the non-serving sectors may reduce the likelihood of persistent overloads at the non-serving sectors.

In one embodiment of the instant invention, upper and lower limits are established as shown in Figure 3, beyond which the TPR may not be adjusted by the mobile unit 120. An exemplary range of allowable TPR adjustment is +/- 2 dB from the nominal TPR with a step size of 0.5 dB.

Those skilled in the art will appreciate that transmissions on the PDCH can be made on multiple time-interlaced channels known as ARQ channels. In one embodiment of the instant invention, the mobile unit 120 is permitted to set individual TPRs for each of the ARQ channels. In some applications, however, a simplified approach may be useful. For example, at the end of each 40 ms boundary (in Revision D, there are 4 ARQ channels and each PDCH transmission spans 10 ms) the mobile unit 120 separates out the ARQ channels on which PDCH transmissions have reached the retransmission limit. If the transmissions on all such channels have failed, the mobile unit 120 increases the PDCH TPR by TPR_ADJUST_UP. If all such channels succeed, the mobile unit 120 decreases the PDCH TPR by TPR_ADJUST_DOWN. If some transmissions succeed while others fail, the TPR change is a mean of the individual TPR changes that would normally have occurred on each ARQ channel in response to the transmission success or failure. An alternative rule is to TPR_ADJUST_UP if transmission on any ARQ channel fails and TPR_ADJUST_DOWN otherwise. Since each PDCH sub-channel can have a separate TPR, per sub-channel based operation is another option. It will avoid the complexity introduce by the situations that some sub-channels are on and some off, some good and some bad, and so on.

In one embodiment of the instant invention, it may be useful for both serving and non-serving base stations 110 to "know" the TPR on the PDCH for at least two reasons. First, the PDCH decoder may make use of the TPR. Second, the TPRs may be used to estimate loading.

To alleviate the impact of TPR error at the non-serving base stations 110, the mobile unit 120 transmits an indication of whether it has increased or decreased its TPR. This indication will allow the non-serving base stations 110 to track the TPR of the mobile unit 120 more reliably. An existing bit, such as the mobile station indicator bit (MSIB), on the reverse packet data control channel may be used to support this function. MSIB is currently defined in the CDMA2000 Rev. D standard. In order to preserve the original usage of the MSIB, only the MSIB corresponding to the first sub-packet transmission is redefined for the purpose of mobile station TPR change indication.

In one embodiment of the instant invention, the current scheduling and rate control protocols specify a TPR limit value, while the rate steps adjust TPR limits. Separate tables downloaded to the mobile station specify nominal TPR values for each PDCH rate as well as the TPR steps (in dB) implied by the rate control bits and the rate at which the mobile is currently transmitting. The proposed OLPC scheme is transparent to the PDCH transmission and control mechanisms since adjusted TPRs still meet the TPR limits implied by the schedule grants and rate control bits.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories. Instructions that make up the various software layers, routines, or modules in the various systems may be stored in respective storage devices. The instructions, when executed by a respective control unit, cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method for controlling a traffic-to-pilot ratio for a communications channel, the method comprising:
transmitting information over the communications channel; and
adjusting the traffic-to-pilot ratio for the communications channel in response to receiving a signal indicating whether the information was successfully received.

2. A method, as set forth in claim 1, wherein adjusting the traffic-to-pilot ratio for the communications channel in response to receiving the signal indicating whether the information was successfully received further comprises adjusting the traffic-to-pilot ratio down in response to receiving a signal indicating that the information was successfully received.

3. A method, as set forth in claim 2, wherein adjusting the traffic-to-pilot ratio down in response to receiving the signal indicating that the information was successfully received further comprises adjusting the traffic-to-pilot ratio down in response to receiving an acknowledgement signal.

4. A method, as set forth in claim 1, wherein adjusting the traffic-to-pilot ratio for the communications channel is response to receiving the signal indicating whether the information was successfully received further comprises adjusting the traffic-to-pilot ratio up in response to receiving a signal indicating that the information was not successfully received.

5. A method, as set forth in claim 4, wherein adjusting the traffic-to-pilot ratio up in response to receiving the signal indicating that the information was not successfully received further comprises adjusting the traffic-to-pilot ratio up in response to receiving a negative acknowledgement signal.

6. A method, as set forth in claim 5, wherein adjusting the traffic-to-pilot ratio up in response to receiving the negative acknowledgement signal further comprises adjusting the traffic-to-pilot ratio up in response to receiving a preselected number of negative acknowledgement signals.

7. A method, as set forth in claim 1, wherein adjusting the traffic-to-pilot ratio for the communications channel in response to receiving the signal indicating whether the information was successfully received further comprises adjusting the traffic-to-pilot ratio down by a first preselected amount in response to receiving a signal indicating that the information was successfully received and adjusting the traffic-to-pilot ratio up by a second preselected amount in response to receiving a signal indicating that the information was not successfully received.

8. A method, as set forth in claim 7, wherein adjusting the traffic-to-pilot ratio down by the first preselected amount in response to receiving the signal indicating that the information was successfully received and adjusting the traffic-to-pilot ratio up by the second preselected amount in response to receiving a signal indicating that the information was not successfully received further comprises the first amount being greater than the second amount.

9. A method, as set forth in claim 1, further comprising reducing the traffic-to-pilot ratio for the communications channel in response to no information being transmitted.

10. A method, as set forth in claim 1, further comprising preventing the traffic-to-pilot ratio for the communications channel being adjusted beyond a preselected limit.
